# EUROPÄISCHE PATENTANMELDUNG

(11) **EP 1 077 584 A2**
(43) Veröffentlichungstag der Anmeldung: **21.02.2001**
(21) Anmeldenummer: 00116841.8
(22) Anmeldetag: 04.08.2000
(51) Int. Cl.: H04R 3/00

(54) **Verfahren und Vorrichtung zur Kompensation von Verlusten eines Signals**

(30) Priorität: 16.08.1999 DE 19938158
(71) Anmelder: DaimlerChrysler AG, 70567 Stuttgart (DE)
(72) Erfinder: Linhard, Klaus, 89601 Schelklingen (DE)

(57) **Zusammenfassung**

Für eine besonders verlustarme und echofreie Kommunikation zwischen mehreren Teilnehmern in einem Raum (1) wird erfindungsgemäß bei einem Verfahren zur Kompensation von Verlusten eines Signals (S) auf einem Übertragungsweg zwischen mindestens einem Sendeort (6) und einem Empfangsort (4) in einem Raum (1) der Übertragungsweg des Signals (S) bestimmt und anhand des Übertragungsweges mindestens ein Parameter einer zugehörigen Übertragungsfunktion ermittelt, wobei anhand des ermittelten Parameters der Signalpegel für eine vorgebbare Position (P1 bis P4) im Übertragungsweg gesteuert wird. Darüber hinaus ist eine zur Durchführung des Verfahrens besonders geeignete Vorrichtung vorgesehen.

## Beschreibung

Die Erfindung bezieht sich auf ein Verfahren zur Kompensation von Verlusten eines Signals auf einem Übertragungsweg, insbesondere einem akustischen Übertragungsweg, zwischen mindestens einem Sendeort und einem Empfangsort in einem Raum, insbesondere in einem Fahrzeuginnenraum.

Eine ähnliche Thematik ist in der gleichzeitig eingereichten Anmeldung 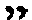 Kommunikationsanlage für Insassen in einem Fahrzeug" behandelt, deren Offenbarungsgehalt dieser Anmeldung zuzurechnen ist. Die genannte Anmeldung das amtliche De-Aktenzeichen 199 38 171.2.

In einem Fahrzeug, z.B. in einem Personenkraftwagen, kommt es aufgrund von Umgebungsgeräuschen zur Beeinträchtigung der Kommunikation zwischen Fahrzeuginsassen. Zum einen wird die Kommunikation durch die Position der Insassen zueinander beeinflußt. Dabei ist die Qualität der Kommunikation bei in Reihe hintereinander angeordneten Positionen besonders stark durch Sprechrichtung (Signalausbreitung) und daraus resultierend durch entsprechende Signalverluste auf dem Übertragungsweg bestimmt. Zum anderen wird die Kommunikation zwischen den Insassen beispielsweise durch Fahr- oder Windgeräusche beeinträchtigt. Zur Verbesserung der Kommunikation im Innenraum des Fahrzeug werden üblicherweise Anti-Schallsysteme verwendet, die vor allem Umgebungsgeräusche, insbesondere Motorgeräusche, Fahrgeräusche, Gebläsegeräusche, reduzieren. Dazu weisen derartige Anti-Schallsysteme in Kopfnähe der Insassen beispielsweise ein Mikrofon auf, das zur Erfassung des breitbandigen Geräuschsignals dient. Das Drehzahlsignal des Motors kann dabei als Referenz für das Motorgeräuschsignal dienen. Über einen Lautsprecher wird ein dem Geräuschsignal gegenphasiges Signal, ein sogenanntes Anti-Schallsignal, ausgegeben. Ein solches Anti-Schallsystem ist z.B. in dem Artikel von Garcia-Bonito et al.: Generation of Zones of Quiet Using a Virtual Microphone Arrangement, Journal Acoustical Society of America, 101, June 1997, Seiten 3498 bis 3516, beschrieben. Nachteilig dabei ist, daß die sprachliche Kommunikation der Insassen untereinander durch akustisch ungünstige Positionen im Fahrzeug weiterhin wesentlich beeinträchtigt ist.

Zusätzlich ist in heutigen Fahrzeugen eine Freisprecheinrichtung für Funktelefone vorgesehen, die eine Kommunikation mit fernen Teilnehmern ermöglicht. Auch hier steht üblicherweise die Reduzierung der Umgebungsgeräusche, wie z.B. Audiosignale, Fahrgeräusche oder Gebläsegeräusche, im Fahrzeuginnenraum für eine verbesserte Kommunikation im Vordergrund. Darüber hinaus sind bei derartigen Freisprecheinrichtungen aufgrund von besonders langen Signallaufzeiten im Fernsprechnetz auftretende akustische und elektrische Echos zu kompensieren, die ebenfalls die Kommunikation wesentlich beeinträchtigen. Hierzu werden üblicherweise Echokompensatoren verwendet. Durch das insbesondere auf den Fahrer des Fahrzeugs ausgerichtete Mikrofon, ist aber auch hier eine Benutzung der Freisprecheinrichtung für weitere Insassen aufgrund der akustisch ungünstigen Position im Fahrzeug sehr begrenzt.

Der Erfindung liegt daher die Aufgaben zugrunde, ein Verfahren zur Kompensation von Verlusten eines Signals auf einem Übertragungsweg anzugeben, bei dem eine besonders verlustarme und echofreie Kommunikation zwischen mehreren Teilnehmern in einem Raum ermöglicht ist. Darüber hinaus ist eine Vorrichtung zur Kompensation von Verlusten eines Signals anzugeben, bei deren Betrieb eine Beeinträchtigung der Kommunikation durch Umgebungsgeräusche und/oder Echos möglichst vermieden ist.

Die erstgenannte Aufgabe wird bei dem Verfahren zur Kompensation von Verlusten des Signals auf dem Übertragungsweg zwischen mindestens einem Sende- und Empfangsort in einem Raum erfindungsgemäß gelöst, in dem der Übertragungsweg des Signals bestimmt und anhand des Übertragungsweges mindestens ein Parameter einer zugehörigen Übertragungsfunktion ermittelt wird, wobei anhand des ermittelten Parameters der Signalpegel für eine vorgebbare Position im Übertragungsweg gesteuert wird.

Die Erfindung geht dabei von der Überlegung aus, daß ein akustisches Signal, insbesondere ein breitbandiges Sprachsignal, bei dessen Ausbreitung in einem Raum, insbesondere im Innenraum eines Fahrzeugs, besonders stark schwankt. Darüber hinaus wird die Ausbreitung des Sprachsignals durch weitere Störsignale, wie z.B. Fahr- und Windgeräusche, sowie durch elektronische Systeme verursachte akustische und elektrische Echos wesentlich beeinflußt. D.h. einerseits sollten die unterschiedlichen Pegelverluste des Signals auf dem akustischen Übertragungsweg, wie sie bei der sprachlichen Kommunikation zwischen Insassen in dem Fahrzeug auftreten, kompensiert werden. Andererseits sollten die auf das Sprachsignal einwirkenden Störsignale wesentlich reduziert werden. Ferner ist auch der Übertragungsweg zwischen dem Sende- und Empfangsort, insbesondere die Übertragungsrichtung, zu berücksichtigen. D.h. in Abhängigkeit von der jeweiligen Position der sprechenden (=Sendeort) bzw. zuhörenden Person (=Empfangsort) in dem Raum kommt es zu einer unterschiedlich starken Beeinträchtigung der Kommunikation. Um dies möglichst zu vermeiden, ist das Verfahren derart ausgelegt, daß die Verluste des Signalpegels für jede beliebige Position oder Ort in dem Raum differenziert ausgeglichen werden. Zusätzlich werden zu dem Ausgleich der Pegelverluste die auf das Signal einwirkenden Störsignale vermieden. Dazu wird bevorzugt ein Parameter einer dem Übertragungsweg zugehörigen Übertragungsfunktion ermittelt, der zur Steuerung des Signalpegels verwendet wird. Die Steuerung des Signalpegels für eine vorgebbare Position im Raum, z.B. für die hintere Position im Fahrzeug (=Empfangsposition), wenn die Person in der vorderen Position spricht (=Sendeposition), anhand des Parameters der den Übertragungsweg beschreibenden Übertragungsfunktion gewährleistet eine besonders gute Kommunikation zwischen allen Personen im gesamten Raum.

Vorteilhafte Ausgestaltungen der Erfindung sind Gegenstand der Unteransprüche.

Vorteilhafterweise wird als Übertragungsweg ein akustischer Pfad und/oder ein elektrischer Pfad des Signals bestimmt. Dabei umfaßt die Bestimmung des akustischen Pfads beispielsweise die Bestimmung des Sendeorts, des Empfangsorts, die zwischen dem Sendeort und Empfangsort zu übertragene Signalart, z.B. ein Sprachsignal oder Audiosignal, und/oder die auf den Übertragungsweg wirkenden Umgebungsgeräusche, wie z.B. akustische Echosignale, Wind- oder Fahrgeräusche. Analog dazu wird bei der Ermittlung des elektrischen Pfads z.B. der Sendeort und der Empfangsort bestimmt. Darüber hinaus werden die auf den elektrischen Pfad wirkenden Störsignale, z.B. die durch die Rückkopplung angeregten elektrischen Echosignale, bestimmt. Durch die Ermittlung des Übertragungsweges ist gewährleistet, daß die den Übertragungsweg kennzeichnenden Einflüsse bestimmt werden, so daß der Signalpegel zur Kompensation dieser Einflüsse entsprechend gesteuert wird.

Vorteilhafterweise wird als Parameter die Dämpfung des Signals zwischen dem Sendeort und dem Empfangsort bestimmt. Beispielsweise wird die Dämpfung des Signals über dem gesamten Übertragungsweg, und damit die Differenz des Signalpegels zwischen dem Sendeort und dem Empfangsort, bestimmt. Somit wird beispielsweise derjenige Parameter bestimmt, der die Kommunikation zwischen der vorderen und der hinteren Reihe im Fahrzeug besonders stark beeinflußt.

Zweckmäßigerweise wird für die vorgebbare Position bei Überschreiten eines maximalen Werts der Dämpfung der Signalpegel verstärkt. Mit anderen Worten: Weist der Wert der Dämpfung, z.B. am Empfangsort (= Zuhörer in der hinteren Reihe des Fahrzeugs), einen positiven Wert auf - es liegt tatsächlich eine Dämpfung des Signals für den Übertragungsweg vor - dann wird das zu übertragene Signal um einen dem Dämpfungswert entsprechenden Betrag verstärkt. Dies bedeutet z.B. bei der Kommunikation zwischen den Personen im Fahrzeug, daß das zu übertragende Sprachsignal von hintereinander sitzenden Personen um einem größeren Wert verstärkt wird, als das von nebeneinander sitzenden Personen, da zwischen diesen eine geringere Dämpfung vorliegt. Insbesondere wird bei hintereinander sitzenden Personen die Verstärkung des Sprachsignals in Abhängigkeit von der aktiv sprechenden Person verstärkt. D. h. eine besonders große Verstärkung des Signals erfolgt dann, wenn die vordere Person spricht und die hintere Person zuhört.

Um auch bei einer Addition von mehreren Schallanteilen des Signals auf dem Übertragungsweg einer besonders natürliche und unbeschwerte Kommunikation zu ermöglichen, wird bei Unterschreiten eines minimalen Werts der Dämpfung der Signalpegel für die vorgebbare Position gedämpft. Beispielsweise kann es bei einer Übertragung des Signals der sprechenden Person sowohl auf dem akustischen als auch auf dem elektrischen Pfad zu einer Überlagerung beider Signalanteile kommen, wodurch Rückkopplungen auftreten, die durch Dämpfung des entsprechenden Signalpegels besonders sicher vermieden werden.

Die Verstärkung oder Dämpfung des Signalpegels anhand eines Schwellwerts - maximaler bzw. minimaler Wert der Dämpfung - ermöglicht eine besonders einfache und schnelle Einstellung des Signalpegels. Durch ein derartiges Setzen von Schwellwerten für die Verstärkung oder Dämpfung wird ermöglicht, den verschiedenen Übertragungswegen und den diesen zugrundeliegenden Übertragungsfunktionen zugehörige Dämpfungswerte zuzuordnen.

Weiterhin wird zweckmäßigerweise als Parameter die Laufzeit des Signals zwischen dem Sendeort und dem Empfangsort bestimmt. Dabei kann die Bestimmung des Parameters durch Rückgriff auf einmalig oder regelmäßig ermittelte Parameter für die Laufzeit erfolgen. Insbesondere wird die Laufzeit des Signals auf dem akustischen Pfad, d. h. die Laufzeit des Signals auf dem natürlichen Schallweg, berücksichtigt.

Vorzugsweise wird in Abhängigkeit von der Laufzeit des akustischen Signals, insbesondere das Signal auf dem elektrischen Pfad, zeitlich verzögert. Hierdurch ist es in besonders einfacher Art und Weise ermöglicht, daß das die gleiche Information enthaltene Signal sowohl auf dem akustischen Pfad als auch auf dem elektrischen Pfad gleich schnell übertragen wird.

Vorteilhafterweise werden darüber hinaus Parameter bestimmt, die akustische und/oder elektrische Echos zwischen dem Sendeort und dem Empfangsort repräsentieren. Mittels dieser Parameter können durch eine entsprechende Steuerung des Signalpegels in Abhängigkeit von den ermittelten akustischen und/oder elektrischen Echos diese für den vorgegebenen Ort kompensiert werden. Vorzugsweise wird ein weiterer Parameter gewählt, der ein Störsignal zwischen dem Sendeort und dem Empfangsort repräsentiert. Beispielsweise wird als Störsignal ein Geräuschsignal, insbesondere ein Fahrgeräuschsignal oder ein Windgeräuschsignal, bestimmt. In beiden Fällen - Echos und/oder Störsignal - wird der Signalpegel analog zu dem Verfahren bei den oben beschriebenen Parametern in Abhängigkeit von der Signalart und der Signalintensität entsprechend gesteuert.

Je nach Größe und Art des Raumes, z.B. Fahrzeuginnenraum oder Konferenzraum, werden zur Steuerung des Signalpegels für den vorgegebenen Ort mehr als ein Parameter ermittelt. Zweckmäßigerweise sind die Werte des oder jeden Parameters für mindestens einen vorgegebenen Übertragungsweg hinterlegt und werden zur Steuerung des Signalpegels verwendet. Insbesondere zu Diagnose- oder Analysezwecken können aus den gespeicherten Werten Abbilder von Übertragungswegen in dem Raum erstellt werden, die den Signalverlust zu vorgebbaren Positionen im Übertragungsweg beschreiben. Bevorzugt sind die Werte der Parameter in einer Dämpfungsmatrix hinterlegt, die jedem Übertragungsweg die spezifischen Parameter zuordnet. Somit ist der komplexe Zusammenhang zwischen den Parametern, die den Übertragungsweg und die zugehörige Übertragungsfunktion repräsentieren, in besonders einfacher Art und Weise beschrieben. Darüber hinaus ist das Verfahren im Hinblick auf die Verarbeitung der Signale beschleunigt.

Die zweit genannte Aufgabe wird bei einer Vorrichtung zur Kompensation von Verlusten des Signal auf dem Übertragungsweg erfindungsgemäß gelöst durch eine Steuereinheit zur Bestimmung des Übertragungsweges sowie zur Ermittlung mindestens eines Parameters einer zugehörigen Übertragungsfunktion, wobei die Steuereinheit mit mindestens einer Pegelwaage verbunden ist, die in Kombination mit mindestens einem Echokompensator zwischen dem Sendeort und dem Empfangsort zur Steuerung des Signalpegels für eine vorgebbare Position im Übertragungsweg angeordnet ist. Vorzugsweise dient am Sendeort als Sender mindestens ein Mikrofon. Alternativ kann an Stelle eines Mikrofons auch ein Mikrofonarray verwendet werden. Am Empfangsort dient zweckmäßigerweise als Empfänger mindestens ein Lautsprecher. Je nach Art und Größe des Raumes können auch weitere Lautsprecher vorgesehen sein. Je nach Raumgröße können mehrere Sende- und Empfangsorte durch ein oder mehrere entsprechende Lautsprecher-Mikrofon-Systeme verbunden sein.

In vorteilhafter Ausgestaltung ist im Fahrzeug je Person und Position mindestens ein Lautsprecher-Mikrofon-System vorgesehen. Die Pegelwaage dient dabei der Steuerung des betreffenden und/oder benachbarter Laufsprecher-Mikrofon-Systems/e. Beispielsweise wird das Mikrofon mit dem höchsten Pegel als das aktive Mikrofon erkannt. Der dem aktiven Mikrofon lokal zugeordnete Lautsprecher wird mittels der Pegelwaage deaktiviert oder stark gedämpft. Die Lautsprecher benachbarter Lautsprecher-Mikrofon-Systemen werden demgegenüber geöffnet, d. h. das von dem aktiven Mikrofon ausgehende Signal wird mittels des elektrischen Pfades auf die benachbarten Lautsprecher übertragen.

Zur Verstärkung und/oder Dämpfung des Signalpegels ist vorteilhafterweise zwischen dem Lautsprecher und dem Mikrofon eine vorzugsweise steuerbare Dämpfungseinheit vorgesehen. Hierdurch ist in Abhängigkeit von dem ermittelten Übertragungsweg der Signalpegel für die vorgebbare Position entsprechend steuerbar. Somit werden die den Übertragungsweg charakterisierenden unterschiedlichen akustischen Signalpegel durch entsprehcende Verstärkung und/oder Dämpfung des Signalpegels ausgeglichen. Dies ermöglicht in besonders einfacher Art und Weise eine wesentlich verbesserte Kommunikation zwischen den Personen auch für akustisch ungünstige Positionen.

Dabei wird der natürliche Schall (akustischer Signalanteil) nur insoweit durch den verstärkten Schall (elektrischer Signalanteil) gestüzt, daß durch die Addition beider Signalanteil für die vorgegebene Position eine besonders natürliche und unbeschwerte Kommunikation ermöglicht ist.

Nach einer weiteren vorteilhaften Ausgestaltung ist zwischen dem Sendeort und dem Empfangsort ein vorzugsweise steuerbares Zeitglied vorgesehen. Um die unterschiedlichen Laufzeiten des Signals auf dem akustischen und dem elektrischen Pfad anzupassen, wird das Signal auf dem elektrischen Pfad in Abhängigkeit von der akustischen Übertragungszeit zeitlich verzögert. Somit ist gewährleistet, daß beide Signalanteile für eine vorgebbare Position überlagert werden. Insbesondere wird die Übertragungszeit des akustischen Signalanteils bevorzugtermaßen anhand zuvor ermittelter Werte bestimmt.

Zur Vermeidung von akustischen und/oder elektrischen Echos ist der Echokompensator bevorzugt als ein digitales Filter, insbesondere als ein FIR-Filter, ausgeführt. Ein derartiges digitales Frequenzfilter wird dabei in Kombination mit der Pegelwaage verwendet. Durch die Kombination von Echokompensator mit der Pegelwaage ist einerseits eine echofreie Kommunikation ermöglicht. Andererseits sind Verluste des Signals sicher vermieden.

Die mit der Erfindung erzielten Vorteile bestehen insbesondere darin, daß durch die Steuerung des Signalpegels für eine vorgebbare Position im Übertragungsweg anhand des/der die Übertragungsfunktion des Signals beschreibenden Parameter/s eine Beeinträchtigung der Kommunikation durch Umgebungsgeräusche und/oder Echos sicher vermieden ist. Dies ist insbesondere durch die Kombination von Pegelwaage und Echokompensator ermöglicht.

Ausführungsbeispiele der Erfindung werden anhand einer Zeichnung näher erläutert. Darin zeigen:
- FIG 1: schematisch eine Kommunikationsanlage für einen Raum, insbesondere für einen Fahrzeuginnenraum, mit mehreren Sende- und Empfangsorten,
- FIG 2: schematisch die Kommunikationsanlage mit darin verlaufenden akustischen Signalpfaden,
- FIG 3: schematisch die elektrische Schaltung der Kommunikationsanlage, und
- FIG 4: eine Tabelle mit Werten für Parameter verschiedener Übertragungswege.

Gleiche Teile sind in allen Figuren mit den gleichen Bezugszeichen versehen.

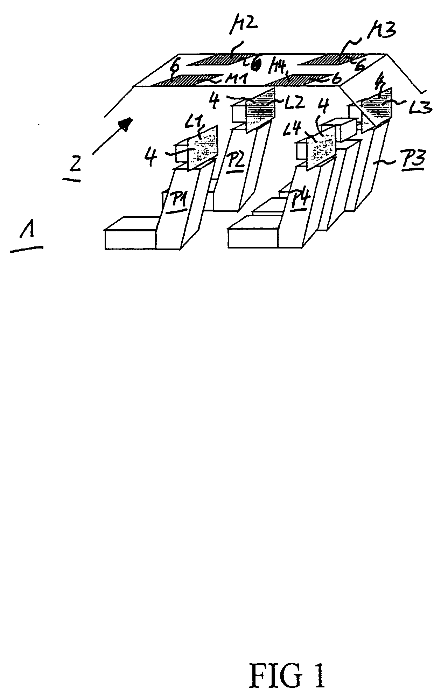

In Figur 1 ist als Raum ein Fahrzeuginnenraum 1 dargestellt mit einer Kommunikationsanlage 2 mit vier Positionen P1 bis P4, die jeweils mindestens einen Empfangsort 4 und mindestens einen Sendeort 6 umfassen. Je nach Größe des Fahrzeuginnenraums 1 kann dieser auch weniger oder mehr Positionen P1 bis P4 umfassen. Im Fahrzeuginnenraum 1 ist am jeweiligen Sendeort 6 mindestens ein Mikrofon M1 bis M4 als Sender vorgesehen. Beispielsweise kann an Stelle des Mikrofons M1 bis M4 auch ein eine Mehrzahl von Mikrofonen umfassendes Mikrofon-Array verwendet werden. Analog dazu ist am jeweiligen Empfangsort 4 mindestens ein Lautsprecher L1 bis L4 vorgesehen. Je nach Ausführungsart können auch mehrere Lautsprecher L1 bis L4 je Empfangsort 4 vorgesehen sein. Somit ist jede Position P1 bis P4 durch ein sogenanntes Lautsprecher-Mikrofon-System gekennzeichnet.

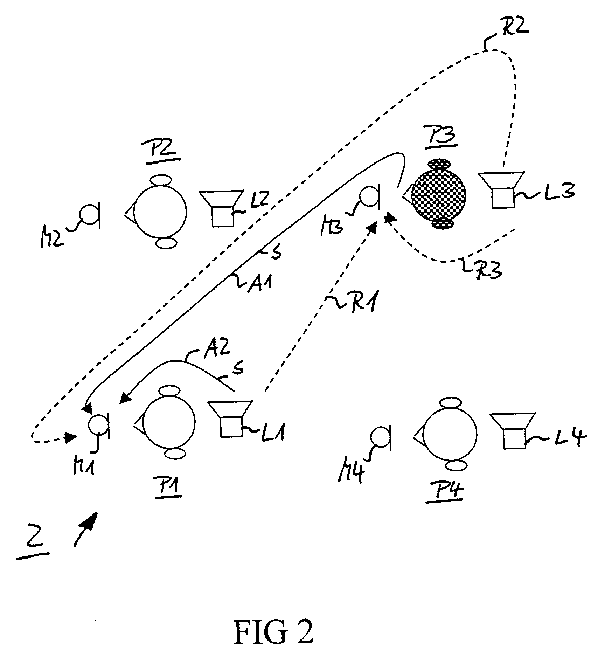

Figur 2 zeigt die vier Positionen P1 bis P4 mit dem jeweils zugehörigen Lautsprecher L1 bis L4 und dem jeweils zugehörigen Mikrofon M1 bis M4. Dabei sind die Positionen P1 und P3 durch Personen besetzt, wobei die Person auf Position P3 aktiv sprechend ist und die Person auf Position P1 zuhört. Im Betrieb der Kommunikationsanlage 2 kommt es zu einer Übertragung des als Sprache ausgesandten Signals S auf mindestens einem akustischen Pfad A1 bis A2. D.h. das Signal S gelangt über den akustischen Pfad A1 direkt von der Person auf Position P3 zur Person auf Position P1. Gleichzeitig wird das Signal S über das der Position P3 zugehörige Mikrofon M3 am Lautsprecher L1 der Position P1 ausgegeben. Die Person auf Position P1 hört demzufolge die Summe aus dem direkten Schall vom akustischen Pfad A1 und dem indirekten Schall vom akustischen Pfad A2 des Signals S.

Zusätzlich zur direkten Eingabe des Signals S am Mikrofon M3 empfängt dieses den indirekten Schall vom Lautsprecher L1 über einen Rückkopplungspfad R1. Darüber hinaus wird das mittels des Mikrofons M1 empfangene Signal S am Lautsprecher L3 ausgegeben, wodurch es über weitere Rückkopplungspfade R2 und R3 zu dem Mikrofon M1 bzw. M3 gelangt. Somit entstehen beim Betrieb der Kommunikationsanlage 2 mehrere Rückkopplungen, die zu einer Instabilität der Kommunikationsanlage 2 führen können, was insbesondere zu lautem Rückkopplungs-Pfeifen führt.

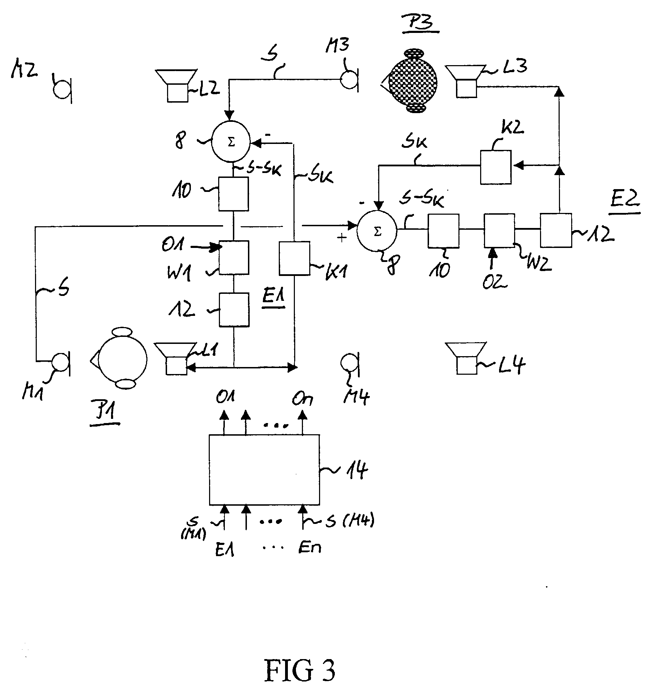

Zur Vermeidung derartiger akustischer und/oder elektrischer Echos sowie zur Kompensation von Pegelverlusten des Signals S auf dem akustischen Pfad A1 umfaßt die Kommunikationsanlage 2 wie in Figur 3 schematisch dargestellt zwei elektrische Pfade E1, E2 des Signals S. Je nach Anzahl der Positionen P1 bis P4 können weitere elektrische Pfade E1 bis E2 vorgesehen sein. Der elektrische Pfad E1 verläuft zwischen dem Mikrofon M3 und dem Lautsprecher L1 und umfaßt eine Pegelwaage W1 und einen Echokompensator K1. D.h. das von dem Mikrofon M3 aufgenommene Signal S wird über den elektrischen Pfad E1 an dem Lautsprecher L1 ausgegeben. Dabei dient die Pegelwaage W1 der Steuerung des Signalpegels am Lautsprecher L1. Der Echokompensator K1 dient der Kompensation von akustischen und/oder elektrischen Echos am Lautsprecher 1. Der Echokompensator K1 ist dabei adaptiv zur Pegelwaage W1 geschaltet.

Dem Mikrofon M3 ist ein Summenglied 8 nachgeschaltet, welchem ein Signal Sk des Echokompensators K1 mit negativem Vorzeichen zugeführt wird. Das Signal Sk repräsentiert dabei den Wert des Signals S, das vom Lautsprecher L1 in das Mikrofon M3 rückgekoppelt wird.

Darüber hinaus umfaßt der elektrische Pfad E1 ein Dämpfungsglied 10 und ein Zeitglied 12. In Abhängigkeit von der Höhe der Dämpfüng des Signals S auf dem Übertragungsweg, insbesondere auf dem akustischen Pfad A1 gemäß Figur 2, wird der Signalpegel mittels des Dämpfungsglieds 10 gesteuert, z.B. verstärkt. Das Zeitglied 12, das insbesondere einstellbar ist, dient der Verzögerung des Signals S auf dem elektrischen Pfad E1, wobei die Verzögerung derart eingestellt ist, daß das sowohl auf dem elektrischen Pfad E1 bzw. auf dem akustischen Pfad A1 übertragene Signal S zeitgleich an der Position P1 ankommt. Unmittelbar vor dem Lautsprecher L1 der Position P1 wird das zeitverzögerte und verstärkte/gedämpfte Signal S zu dem Echokompensator K1 abgezweigt.

Analog zum elektrischen Pfad E1 umfaßt der elektrischen Pfad E2 ebenfalls eine weitere Pegelwaage W2, die in Kombination mit einem weiteren Echokompensator K2 geschaltet ist, sowie ein weiteres Summenglied 8, ein weiteres, insbesondere einstellbares, Dämpfungsglied 10 und ein weiteres, insbesondere einstellbares, Zeitglied 12.

Darüber hinaus umfaßt die Kommunikationsanlage 2 eine Steuereinheit 14, die beispielsweise zentral im Fahrzeuginnenraum angeordnet ist. Die Steuereinheit 14 umfaßt eine Anzahl von Eingängen E1 bis En, über die das Signal S des jeweiligen Mikrofons M1 bis M4 zugeführt wird. Ferner ist eine Anzahl von Ausgängen O1 bis On vorgesehen, die zur Steuerung der Pegelwaagen W1 bis W2 dienen.

Analog zur Kommunikationsanlage 2 in Figur 2 sind die Positionen P1 und P3 besetzt, wobei die Person auf Position P3 aktiv spricht und die Person auf Position P1 zuhört. Bei der Übertragung des Signals S auf dem akustischen Pfad A1 gemäß Figur 2 kommt es zum Verlust und/oder Beeinflussung des Signalpegels durch Dämpfung bzw. Störsignale, wie Fahr- oder Windgeräusche, die mittels der Kommunikationsanlage 2 wie nachfolgend beschrieben ausgeglichen bzw. kompensiert werden:

Dabei wird mittels der Steuereinheit 14 anhand des Signalpegels dasjenige Mikrofon mit dem höchsten Signalpegel als das aktive Mikrofon M3 bestimmt. Der dem aktiven Mikrofon M3 lokal zugeordnete Lautsprecher L3 wird über die zugehörige Pegelwaage W2 deaktiviert, indem diese mittels des zugehörigen Ausgangssignals am Ausgang O2 der Steuereinheit 14 umgeschaltet wird, so daß eine Rückkopplung vom Lautsprecher L3 auf das Mikrofon M3 sicher vermieden ist. Alternativ wird der Signalpegel über die zugehörige Dämpfungseinheit 10 entsprechend stark gedämpft, so daß eine Rückkopplung vom Lautsprecher L3 auf die Mikrofone M1 und/oder M3 möglichst unterbleibt.

Zur Stützung des Signals S auf dem akustischen Pfad A1 am Lautsprecher L1 gemäß Figur 2 wird das Signal S auf dem elektrischen Pfad E1 mittels der aktiv geschalteten Pegelwaage W1 direkt an den Lautsprecher L1 übertragen. Dabei wird der Signalpegel auf dem elektrischen Pfad E1 in Abhängigkeit von mindestens einem Parameter der zugehörigen Übertragungsfunktion gesteuert. Zum Ausgleich der Pegelverluste wird ein Parameter ermittelt, der die Dämpfung des Signals S zwischen der Position P1 und der Position P3 repräsentiert. Bevorzugt wird die Dämpfung des Signals S auf dem akustischen Pfad A1 zwischen der Position P3 und der Position P1 mit Hilfe eines Sollpegels bestimmt. Der Signalpegel wird entsprechend dem Sollpegel mittels des Dämpfungsglieds 10 verstärkt. D.h. die Verluste des Signals S auf dem akustischen Pfad A1 werden mittels des steuerbaren Dämpfungsglieds 10 im elektrischen Pfad E1 ausgeglichen. Beispielsweise beträgt der Sollpegel für die Dämpfung des Signals S auf dem akustischen Pfad A1 in einem Standard-Personenkraftwagen ca. 12 dB. Je nach Art und Ausführung der Kommunikationsanlage 2 kann der Signalpegel mittels des Dämpfungsglieds 10 anhand eines vorgegebenen oder eines variabel einstellbaren Sollpegels für den betreffenden Übertragungsweg so gesteuert werden, daß der Sollpegel erreicht wird. Beispielsweise wird bei Überschreiten eines maximalen Werts (= maximale Dämpfung liegt vor) oder bei Unterschreiten eines minimalen Werts (= Überlagerung mehrerer Schallanteile) der Signalpegel entsprechend verstärkt bzw. gedämpft.

Damit der akustische (= natürlicher Schall) und der elektrische (=verstärkter Schall) Schallanteil des Signals S gleichzeitig am Lautsprecher L1 ankommen, wird das verstärkte Signal S im elektrischen Pfad E1 mittels des Zeitglieds 12 zeitverzögert. Die Zeit des Zeitglieds 12 ist dabei so gewählt, daß sie die Laufzeit des Signals S auf dem akustischen Pfad A1 repräsentiert. Somit kommt es am Lautsprecher L1 zu einer Addition der beiden Schallanteile - akustisch und elektrisch - des Signals S. Das verstärkte und zeitverzögerte Signal S wird unmittelbar vor dem Lautsprecher L1 dem Echokompensator E1 zugeführt. Der Echokompensator E1 umfaßt zur Kompensation der akustischen und/oder elektrischen Echos ein digitales Filter, insbesondere ein FIR-Filter. Das Signal Sk des Echokompensators E1 wird dem Summenglied 8 mit negativen Vorzeichen zur Kompensation der akustischen und/oder elektrischen Echos im Signal S zugeführt. Zusätzlich kann dem Echokompensator ein weiteres nicht dargestelltes Zeitglied vorgeschaltet sein, das die Laufzeit des Rückkopplungspfads R1 oder P2 vom Lautsprecher L1 bzw. L3 zum Mikrofon M3 bzw. M1 repräsentiert.

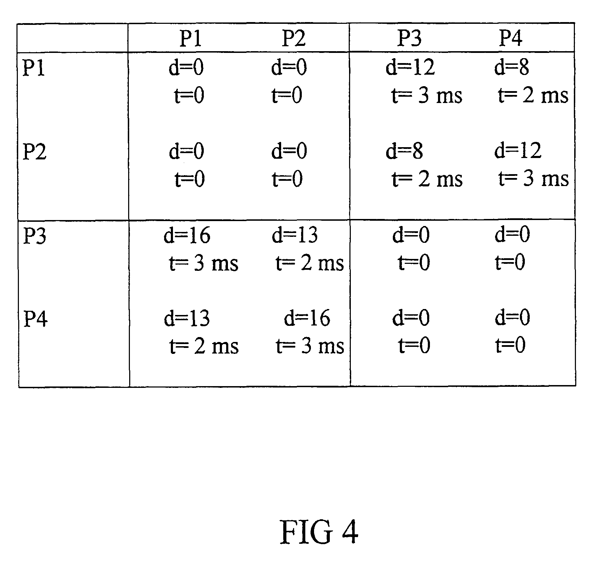

Für eine besonders einfache und schnelle Kompensation der Verluste des Signals S sind die einzelnen den zugehörigen Übertragungsweg beschreibenden Parameter, wie z.B. die Dämpfung und die Übertragungszeit, in einer Dämpfungsmatrix gemäß der Tabelle 1 in Figur 4 hinterlegt. Dabei entsprechen die Spalten und die Zeilen jeweils den Positionen P1 bis P4, wobei die Positionen P1 bis P4 im Fall der Spalten aktiv sprechende und im Fall der Zeilen aktiv zuhörende Positionen P1 bis P4 sind. Die Matrixelemente charakterisieren zum einen Sollpegel der Dämpfung für die vorgegebenen Übertragungswege. Zum anderen repräsentieren sie die für den vorgegebenen Übertragungsweg zugehörige Übertragungszeit und/oder Verzögerungszeit. Die angegebenen Werte sind beispielhaft für die unterschiedlichen Übertragungswege in einem Standard-Personenkraftwagen meßtechnisch ermittelt worden. Dabei wurden die Meßwerte anhand der Übertragungsfunktion des Signals S im Bereich von ca. 300 Hz bis ca. 2 kHz gemessen. Es wird deutlich, daß neben der Position P1 bis P4 der Personen zueinander auch deren Rolle - Sprechen oder Zuhören - entscheidend ist für die Beeinträchtigung der Signalausbreitung. Beispielsweise ergibt sich ein Verlust von ca. 16 dB, wenn die Person auf Position P1 spricht und die Person dahinter auf Position P3 zuhört. Werden bei gleicher Position P1 und P3 nur die Rollen als Sprecher und Hörer vertauscht, so ergibt sich ein Verlust von ca. 13 dB. Mittels der in der Dämpfungsmatrix hinterlegten Werte werden in Abhängigkeit vom vorgegebenen Übertragungsweg die entsprechende Dämpfungseinheit 10 sowie das Zeitglied 12 eingestellt. Somit ist die für den akustischen Pfad A1 oder A2 erforderliche Verstärkung des Signalpegels besonders einfach und schnell bestimmt, wodurch eine besonders aufivendige Signalverarbeitung sicher vermieden ist.

In der Dämpfungsmatrix gemäß der Tabelle 1 werden die akustischen Übertragungswege zwischen jeweils seitlich benachbarten Positionen P1 und P2 bzw. P3 und P4 nicht gestützt. Die Übertragungsfunktion wird als hinreichend gut für eine Kommunikation betrachtet. In Abhängigkeit von der Größe des Raums 1 variiert die Anzahl der Positionen P1 bis P4, die Anzahl der Mikrofone M1 bis M4 sowie der Lautsprecher L1 bis L4 und daraus resultierend auch die Anzahl der möglichen Übertragungswege und der Matrixelemente der Dämpfungsmatrix. Darüber hinaus können mittels der Dämpfungsmatrix weitere Parameter der Übertragungsfunktion erfaßt sein, wie z.B. Signalart, Störsignale.

## Patentansprüche

1. Verfahren zur Kompensation von Verlusten eines Signals (S) auf einem Übertragungsweg zwischen mindestens einem Sendeort (6) und einem Empfangsort (4) in einem Raum (1), bei dem der Übertragungsweg des Signals (S) bestimmt und anhand des Übertragungsweges mindestens ein Parameter einer zugehörigen Übertragungsfunktion ermittelt wird, und bei dem anhand des ermittelten Parameters der Signalpegel für eine vorgebbare Position (P1 bis P4) im Übertragungsweg gesteuert wird.

2. Verfahren nach Anspruch 1, bei dem als Übertragungsweg ein akustischer Pfad (A1 bis A2) und/oder ein elektrischer Pfad (E1 bis E2) des Signals (S) bestimmt wird.

3. Verfahren nach Anspruch 1 oder 2, bei dem als Parameter die Dämpfung des Signals (S) zwischen dem Sendeort (6) und dem Empfangsort (4) bestimmt wird.

4. Verfahren nach Anspruch 3, bei dem bei Überschreiten eines maximalen Werts der Dämpfung der Signalpegel für die vorgebbare Position (P1 bis P4) verstärkt wird.

5. Verfahren nach Anspruch 3, bei dem bei Unterschreiten eines minimalen Werts der Dämpfung der Signalpegel für die vorgebbare Position (P1 bis P4) gedämpft wird.

6. Verfahren nach Anspruch 1 oder 2, bei dem als Parameter die Übertragungszeit des Signals (S) auf dem akustischen Pfad (A1 bis A2) zwischen dem Sendeort (6) und dem Empfangsort (4) bestimmt wird.

7. Verfahren nach Anspruch 6, bei dem in Abhängigkeit von der Übertragungszeit das Signal (S) auf dem elektrischen Pfad (E1 bis E2) zeitlich verzögert wird.

8. Verfahren nach Anspruch 1 oder 2, bei dem als Parameter akustische und/oder elektrische Echos zwischen dem Sendeort (6) und dem Empfangsort (4) bestimmt werden.

9. Verfahren nach Anspruch 1 oder 2, bei dem als Parameter ein Störsignal zwischen dem Sendeort (6) und dem Empfangsort (4) bestimmt wird.

10. Verfahren nach einem der Ansprüche 1 bis 9, bei dem die Werte des oder jeden Parameters für mindestens einen vorgegebenen Übertragungsweg hinterlegt sind und zur Steuerung des Signalpegels verwendet werden.

11. Verfahren nach Anspruch 10, bei dem die Werte des oder jeden Parameters in Form einer Dämpfungsmatrix hinterlegt werden.

12. Vorrichtung zur Kompensation von Verlusten eines Signals (S) auf einem Übertragungsweg zwischen mindestens einem Sendeort (6) und mindestens einem Empfangsort (4) in einem Raum (1), wobei eine Steuereinheit (14) zur Bestimmung des Übertragungsweges sowie zur Ermittlung mindestens eines Parameters einer zugehörigen Übertragungsfunktion vorgesehen ist, und wobei die Steuereinheit (14) mit mindestens einer Pegelwaage (W1 bis W2) verbunden ist, die in Kombination mit mindestens einem Echokompensator (K1 bis K2) zwischen dem Sendeort (6) und dem Empfangsort (4) zur Steuerung des Signalpegels für eine vorgebbare Position (P1 bis P4) im Übertragungsweg angeordnet ist.

13. Vorrichtung nach Anspruch 12, wobei zwischen dem Sendeort (6) und dem Empfangsort (4) eine Dämpfungseinheit (10) vorgesehen ist.

14. Vorrichtung nach Anspruch 12 oder 13, wobei zwischen dem Sendeort (6) und dem Empfangsort (4) ein Zeitglied (12) vorgesehen ist.

15. Vorrichtung nach einem der Ansprüche 12 bis 14, wobei der Echokompensator (K1 bis K2) ein digitales Filter, insbesondere ein FIR-Filter, ist.

16. Vorrichtung nach einem der Ansprüche 12 bis 15, wobei am Sendeort (6) als Sender mindestens ein Mikrofon (M1 bis M4) dient.

17. Vorrichtung nach einem der Ansprüche 12 bis 16, wobei am Empfangsort (4) als Empfänger mindestens ein Lautsprecher (L1 bis L4) dient.

18. Verwendung einer Vorrichtung zur Kompensation von Verlusten eines Signals (S) auf einem Übertragungsweg nach einem der Ansprüche 12 bis 17 in einer Kommunikationsanlage (2) mit mindestens einem Mikrofon (M1 bis M4) und einem Lautsprecher (L1 bis L4) in einem Fahrzeug.
